# EUROPEAN PATENT SPECIFICATION

(11) **EP 1 183 763 B1**
(45) Date of publication and mention of the grant of the patent: **07.05.2003**
(21) Application number: 00926624.8
(22) Date of filing: 25.05.2000
(51) Int. Cl.: H02H 3/33

(54) **AN ELECTRICAL MACHINE WINDING GROUND-FAULT PROTECTION SYSTEM**
ERDUNGS - FEHLERSTROMSCHUTZSCHALTUNG FÜR DIE WICKLUNG EINER ELEKTRISCHEN MASCHINE
SYSTEME DE PROTECTION CONTRE LES FUITES A LA TERRE POUR ENROULEMENT DE MACHINE ELECTRIQUE

(30) Priority: 27.05.1999 PL 33347199
(43) Date of publication of application: 06.03.2002
(73) Proprietor: ABB Schweiz AG, 5400 Baden (CH)
(72) Inventor: FULCZYK, Marek, PL-47-220 K dzierzyn-Ko le. (PL); BERTSCH, Joachim, CH-5405 Baden-Dättwi (CH); PFIFFNER, Michael, CH-8906 Bonstetten (CH)
(74) Representative: ABB Patent Attorneys
(86) International application number: CH0000297
(87) International publication number: WO00074194

(56) References cited:
- DE-A- 19 602 911
- US-A- 5 195 008

## Description

The object of the invention is a ground fault protection system of a winding of an electrical machine with an unearthed neutral point, especially for a generator stator winding, applicable during the operation of the machine connected in series with a transformer or connected in parallel with another generator, or directly connected to busbars.

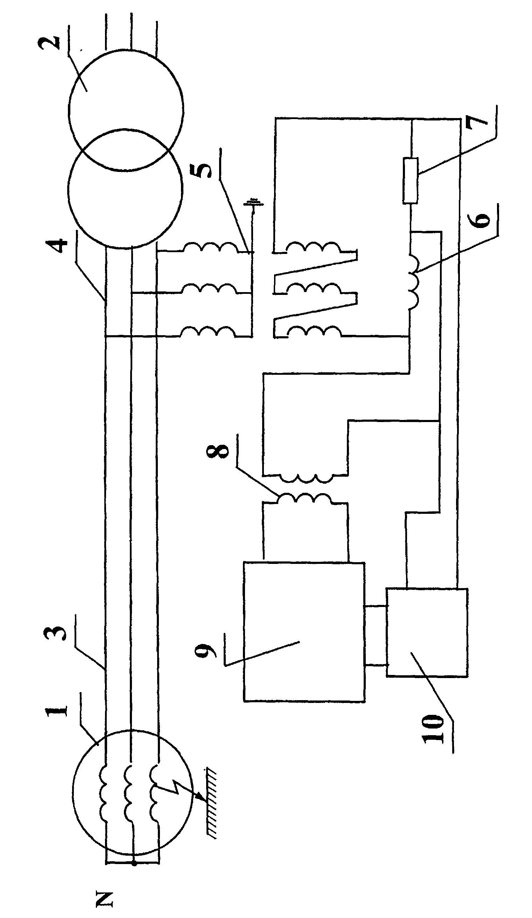

A known ground fault protection system of a generator stator winding with unearthed neutral point presented in ABB Network Partner catalogue No. 1MDB 02012-EN issued in November 1995, page 3, fig. 5, contains a three-phase voltage transformer connected to the generator output terminals and two resistors, one of a lower resistance and the other having resistance approximately 4 times higher than the first one, the resistors being connected in parallel to the secondary side of the three-phase voltage transformer and being connected in series with one another. A system containing a voltage source of frequency equal to approximately ¼ of the generator rated frequency is connected in parallel to the lower-resistance resistor. This system is coupled in parallel with the ground-fault protection unit. A single-phase voltage transformer whose secondary winding is connected with the outputs of the ground-fault protection unit is connected in parallel to the resistor which has approximately 4 times higher resistance than the first resistor.

A disadvantage of the presented ground-fault protection system of a generator stator winding is that the value of the ground-fault current passing at the point of the ground-fault in the generator stator winding, in case of ground faults in any part of the winding, depends mainly upon the value of the resistance of the resistors connected on the secondary side of the three-phase voltage transformer installed at the generator output terminals. In the case of the resistance values of resistors used and required by the protection system, these resistors always cause increase in the value of the ground-fault current passing at the place of the ground fault in the generator stator winding, so that this current largely exceeds 5 A at the place of the ground fault. If a ground fault occurs in the generator stator, this current causes a considerable damage to the stator. Another disadvantage of the presented generator stator winding ground-fault protection system is that the value of the ground-fault current exceeding 5 A restricts the length of the area protected by this ground fault protection system.

The essence of the ground-fault protection system for the winding of an electrical machine, especially for a generator stator winding, according to the invention, where the ground-fault protection system incorporates a three-phase voltage transformer connected to the output terminals of the winding, into whose secondary windings is connected a low-resistance resistor which is connected in parallel to a source of voltage of frequency equal to ¼ of the rated frequency of the machine, and the source of this voltage is coupled with the ground-fault protection unit whose outputs are connected with the secondary winding of a single-phase voltage transformer, and the primary winding of the single-phase voltage transformer is connected in parallel with the secondary winding of the three-phase voltage transformer, is that in the circuit formed by the primary winding of the single-phase voltage transformer and the secondary windings of the three-phase voltage transformer, between the secondary windings of the three-phase voltage transformer and the low-resistance resistor, there is connected in series a shunt reactor. The inductance of the shunt reactor is within 0.01 to 2 millihenries.

The object of the invention is explained as an example embodiment in the drawing which shows a unit diagram of a ground-fault protection system of a generator stator winding operating in a unit with a transformer connected in series.

A generator 1 with unearthed neutral point N is connected with a transformer 2 through busbars 3. Individual output terminals 4 of the generator 1 are connected to earthed primary windings of a three-phase voltage transformer 5 into whose secondary winding is connected in parallel a shunt reactor 6 connected in series with a resistor 7 of low resistance of several hundred ohms. The shunt reactor 6 is connected in parallel with the primary winding of a single-phase voltage transformer 8 whose secondary winding is connected in parallel with a ground-fault protection unit 9. The resistor 7 is connected in parallel with a voltage source of frequency equal to ¼ of the rated frequency of the generator 1, which is an injecting system 10 which is coupled in parallel with the ground-fault protection unit 9.

The voltage injected by the injecting system 10 serves to bias the conductors of the machine with respect to ground, with a frequency that differs from the generator frequency. A ground fault causes a current that depends on the nature of the fault and on the injection voltage. The ground-fault protection unit 9 observes this current and the injected voltage, determines if a fault has occurred and what the nature of the fault is. If necessary, the ground-fault protection unit 9 operates a breaker for disconnecting the generator.

In a trouble-free operation condition of the generator 1 connected with the transformer 2, ground-fault capacitance current and current passing through the elements connected into the secondary windings of the three-phase voltage transformer 5 equal zero. Inductance of the shunt reactor 6 connected to the secondary windings of the three-phase voltage transformer 5 is selected to limit the current passing through the main insulation of the winding of the generator 1 stator during ground fault to a value less than 5 A. The value of the shunt reactor 6 inductance is preferentially within the range from 0.01 to 2 millihenries. By an adequate selection of the inductance of the shunt reactor 6 a proper operation of the ground-fault protection unit 9 is ensured for faults along the whole length of the generator 1 rotor winding, which reduces, and even totally eliminates damage to the magnetic circuit of the generator 1 stator.

The invention can be applied to protecting not only a generator, but also to another type of electrical machine such as a motor or a transformer.

## Claims

1. A ground-fault protection system of a winding of an electrical machine (1) with an unearthed neutral point, incorporating a three-phase voltage transformer (5) connected to the output terminals of the machine (1), to which transformer (5) secondary windings a low-resistance resistor (7) is connected, which resistor (7) is connected in parallel to a voltage source (10) of frequency equal approximately ¼ of the rated frequency of the machine (1), the source of this voltage (10) being coupled with a ground-fault protection unit (9) whose outputs are connected with the secondary winding of a single-phase voltage transformer (8), and the primary winding of the single-phase voltage transformer (8) is connected in parallel with the secondary winding of the three-phase voltage transformer (5) **characterised in that** in the circuit formed by the primary winding of the single-phase voltage transformer (8) and the secondary windings of the three-phase voltage transformer (5), between the secondary winding of the three-phase transformer (5) and the low-resistance resistor (7) a shunt reactor (6) is connected in series.

2. A ground-fault protection system of a winding of an electrical machine (1) according to claim 1 **characterised in that** the inductance of the shunt reactor (6) is within the range from 0.01 to 2 millihenries.

3. A ground-fault protection system of a winding of an electrical machine (1) according to claim 1 **characterised in that** the electrical machine (1) is a generator, a motor or a transformer.

## Patentansprüche

1. Erdfehlerschutzsystem einer Wicklung einer elektrischen Maschine (1) mit einem ungeerdeten Neutralpunkt, mit einem Dreiphasenspannungstransformator (5), der an die Ausgangsanschlüsse der Maschine (1) angeschlossen ist, wobei an die Sekundärwicklungen des Transformators (5) ein niederohmiger Widerstand (7) angeschlossen ist, der parallel zu einer Spannungsquelle (10) mit einer Frequenz gleich etwa 1/4 der Nennfrequenz der Maschine (1) angeschlossen ist, wobei die Quelle dieser Spannung (10) mit einer Erdfehlerschutzeinheit (9) gekoppelt ist, deren Ausgänge an die Sekundärwicklung eines Einphasenspannungstransformators (8) angeschlossen sind, wobei die Primärwicklung des Einphasenspannungstransformators (8) parallel mit der Sekundärwicklung des Dreiphasenspannungstransformators (5) verbunden ist, **dadurch gekennzeichnet, daß** in dem durch die Primärwicklung des Einphasenspannungstransformators (8) und die Sekundärwicklungen des Dreiphasenspannungstransformators (5) gebildeten Stromkreis zwischen der Sekundärwicklung des Dreiphasenspannungstransformators (5) und dem niederohmigen Widerstand (7) eine Nebenschlußdrossel (6) in Reihe geschaltet ist.

2. Erdfehlerschutzsystem einer Wicklung einer elektrischen Maschine (1) nach Anspruch 1, **dadurch gekennzeichnet, daß** die Induktanz der Nebenschlußdrossel (6) im Bereich von 0,01 bis 2 Millihenry liegt.

3. Erdfehlerschutzsystem einer Wicklung einer elektrischen Maschine (1) nach Anspruch 1, **dadurch gekennzeichnet, daß** die elektrische Maschine (1) ein Generator, ein Motor oder ein Transformator ist.

## Revendications

1. Système de protection contre les défauts de raccordement à la masse d'un enroulement d'une machine électrique (1) dont le point neutre n'est pas raccordé à la masse, qui comprend un transformateur de tension triphasée (5) raccordé aux bornes de sortie de la machine (1), une résistance (7) de faible valeur étant raccordée aux enroulements secondaires du transformateur (5), laquelle résistance (7) est raccordée en parallèle à une source de tension (10) dont la fréquence est égale à environ 1/4 de la fréquence nominale de la machine (1), la source de cette tension (10) étant raccordée à une unité (9) de protection contre les défauts de raccordement à la masse dont les sorties sont raccordées à l'enroulement secondaire d'un transformateur de tension monophasée (8), l'enroulement primaire du transformateur de tension monophasée (8) étant raccordé en parallèle sur l'enroulement secondaire du transformateur de tension triphasée (5), **caractérisé en ce que** dans le circuit formé par l'enroulement primaire du transformateur de tension monophasée (8) et de l'enroulement secondaire du transformateur de tension triphasée (5), un réacteur shunt (6) est raccordé en série entre les enroulements secondaires du transformateur triphasé (5) et la résistance (7) de faible valeur.

2. Système de protection contre les défauts de raccordement à la masse d'un enroulement d'une machine électrique (1) selon la revendication 1, **caractérisé en ce que** l'inductance du réacteur shunt (6) est comprise dans la plage de 0,01 à 2 milliHenry.

3. Système de protection contre les défauts de raccordement à la masse d'un enroulement d'une machine électrique (1) selon la revendication 1, **caractérisé en ce que** la machine électrique (1) est un générateur, un moteur ou un transformateur.
